# EUROPÄISCHE PATENTSCHRIFT

(11) **EP 3 947 027 B1**
(45) Veröffentlichungstag und Bekanntmachung des Hinweises auf die Patenterteilung: **08.04.2026**
(21) Anmeldenummer: 20706641.6
(22) Anmeldetag: 11.02.2020
(51) Int. Cl.: B60L 58/12, G01C 21/34, G01C 21/36, B60W 50/14

(54) **VERFAHREN UND VORRICHTUNG ZUM ANZEIGEN DER REICHWEITE EINES FAHRZEUGS**
METHOD AND DEVICE FOR INDICATING THE RANGE OF A VEHICLE
PROCÉDÉ ET DISPOSITIF POUR L'AFFICHAGE DE L'AUTONOMIE D'UN VÉHICULE

(30) Priorität: 27.03.2019 DE 102019204217
(43) Veröffentlichungstag der Anmeldung: 09.02.2022
(73) Patentinhaber: Volkswagen Aktiengesellschaft, 38440 Wolfsburg (DE)
(72) Erfinder: STRUHS, Stefan, 38118 Braunschweig (DE); NEUMANN, Markus, 38533 Vordorf (DE); WENGELNIK, Heino, 38442 Wolfsburg (DE)
(86) Internationale Anmeldenummer: PCT/EP2020/053482
(87) Internationale Veröffentlichungsnummer: WO 2020/192998

(56) Entgegenhaltungen:
- EP-A1- 2 902 243
- DE-A1- 102010 010 620
- DE-A1- 102010 051 469
- DE-A1- 102012 003 292
- DE-A1- 102012 023 632
- US-A1- 2007 001 650
- US-A1- 2012 179 318
- US-A1- 2013 096 818

## Beschreibung

Die vorliegende Erfindung betrifft eine Vorrichtung und ein Verfahren zum Anzeigen der Reichweite eines Fahrzeugs. Insbesondere betrifft die Erfindung eine Vorrichtung und ein Verfahren zur Ermittlung und Anzeige einer routenabhängigen Reichweite eines Fahrzeugs.

Motorbetriebene Fahrzeuge, seien es Kraftfahrzeuge, Motorräder oder Fahrräder mit Hilfsmotor, usw., sind üblicherweise mit einem Energiespeicher ausgerüstet, der den Motor oder die Motoren des Fahrzeugs antreibt. Bei Fahrzeugen mit Verbrennungsmotoren ist der Energiespeicher ein Kraftstofftank, bei Fahrzeugen mit Elektromotoren kommen wiederaufladbare Batterien zum Einsatz, und bei sogenannten Hybridfahrzeugen werden beide Systeme eingesetzt.

Eine der wichtigsten Informationen für den Nutzer eines Fahrzeugs besteht in der Anzeige der mit der im Energiespeicher vorhandenen Energiemenge erzielbaren Reichweite des Fahrzeugs. Bei Fahrzeugen mit Verbrennungsmotor wurde die Reichweite früher lediglich indirekt mittels einer Tankuhr angezeigt, mit der die noch zur Verfügung stehende Kraftstoffmenge abgelesen werden kann. Bei batteriebetriebenen Fahrzeugen wird demgegenüber der Ladezustand (State of Charge, SoC) der Batterie angezeigt. Nachdem in modernen Fahrzeugen über die Motorelektronik auch Angaben über den aktuellen Verbrauch vorliegen, können diese indirekten Reichweitenangaben auf der Basis des aktuellen Verbrauchs auch in direkte Reichweitenangaben, beispielsweise in Form von Restkilometern, umgerechnet werden. In Kombination mit einem Navigationssystem erhält er Nutzer außerdem die Information, ob ein bestimmtes Ziel erreicht werden kann oder nicht.

Die in einem Fahrzeug verfügbare Energiemenge wird jedoch nicht nur für den Antrieb des Fahrzeugs als solches benötigt, sondern auch für eine Vielzahl weiterer Funktionen, beispielsweise sogenannter Komfortfunktionen, wie der Fahrzeugklimatisierung. Ferner hängt der Energiebedarf eines Fahrzeugs von der Streckenführung und der Fahrweise ab. Bei Fahrzeugen mit Elektroantrieb ist dabei zu beachten, dass beim Abbremsen oder beim bergab fahren ein Teil der aufgewendeten Energie zurückgewonnen werden kann. Weil der Energieverbrauch im Fahrzeug in komplexer Weise von vielen Einzelfaktoren abhängt, unterliegt die Berechnung der Restreichweite auf der Basis des Momentanverbrauchs großen Schwankungen, so dass es für den Nutzer des Fahrzeugs schwer abzuschätzen ist, welche Restreichweite mit der verfügbaren Energiemenge tatsächlich noch realisierbar ist.

In den letzten Jahrzehnten hat sich in vielen Ländern ein sehr dichtes Netz an Tankstellen entwickelt, an dem insbesondere Fahrzeuge mit Verbrennungsmotoren mit Kraftstoff betankt werden können. Für Fahrzeuge mit einem Elektroantrieb, insbesondere reine Elektrofahrzeuge, die ausschließlich mit elektrischer Energie betrieben werden, ist aber auch heute noch das Tankstellennetz zum Aufladen der elektrischen Energiespeicher wesentlich weitmaschiger. Dieses Problem wird durch die Tatsache verschärft, dass die Reichweite von elektrisch betriebenen Fahrzeugen noch wesentlich geringer ist, als die von vergleichbaren Fahrzeugen mit Verbrennungsmotor. Nutzer von Elektrofahrzeugen müssen daher bei ihrer Routenplanung schon vorab ein besonderes Augenmerk auf die zur Verfügung stehenden Lademöglichkeiten auf der Route richten, insbesondere, wenn von vornherein klar ist, dass die geplante Route über die durch die Batterieladung zur Verfügung gestellte maximale Reichweite hinausgeht, also ein Nachladen zwingend erforderlich wird. Dies führt bei Nutzern von Elektrofahrzeugen zu einem beunruhigenden Gefühl, das auch mit dem Begriff "Reichweitenangst" umschrieben wird. Der Nutzer überlegt sich also ständig, ob auf Grundlage der aktuellen Fahrtsituation die nächste Lademöglichkeit noch erreicht werden kann.

Die bisher zur Verfügung stehenden Lösungen sind nicht geeignet, diese Reichweitenangst zu minimieren. Indirekte Reichweitenanzeigen sind gänzlich ungeeignet, die Reichweitenangst zu minimieren, da hier jeglicher Bezug zur Restreichweite aufgrund der Vielzahl der oben genannten Einflussfaktoren fehlt. Auch eine Reichweitenanzeige in Form von Kilometern, beispielsweise in einem Fahrerinformationsdisplay oder in einem Instrumentencluster im Armaturenbrett, sind ungeeignet, da einerseits ein Bezug zu den nächsten verfügbaren Ladestationen fehlt, und andererseits die Abhängigkeit der Reichweitenanzeige vom aktuellen Verbrauch zu größeren Schwankungen führt, welche die Reichweitenangst sogar eher verstärken können.

Moderne Fahrzeuge sind, unabhängig von der Antriebsart, heute typischerweise mit einem Navigationssystem zur automatischen Routenplanung ausgerüstet, in welchem auch Tankstellen und Ladestationen hinterlegt sind. Bei Fahrzeugen mit reinem Elektroantrieb gehört ein solcher Navigationssystem aufgrund der größeren Anforderungen an die Routenplanung typischerweise bereits zur Grundausstattung des Fahrzeugs. Wenn eine Route mit einem solchen vorhandenen Navigationssystem geplant wird, bestehen wesentlich aussagekräftigere Möglichkeiten, den Nutzer über die zur Verfügung stehende Reichweite und erreichbaren Tankstellen bzw. Ladestationen zu informieren.

So beschreibt die deutsche Patentanmeldung DE 10 2012 003 292 ein Verfahren und eine Vorrichtung zum Bereitstellen einer Navigationsfunktion in einem Kraftfahrzeug, wobei ein Navigationsziel erfasst wird, und aus der zum Erreichen des Navigationsziels benötigten Energiemenge und einer im Kraftfahrzeug verfügbaren Energiemenge eine Restenergiemenge berechnet wird, die dann auf einer Kartendarstellung als Linienzug, der das erfasste Navigationsziel umschließt, visualisiert wird. Der Nutzer kann so auf der Karte erkennen, ob beispielsweise nach Erreichen des Navigationsziels innerhalb der visualisierten Restreichweite eine Ladestation liegt, oder nicht. Im letzteren Fall müsste der Nutzer also schon vor Erreichen des Navigationsziele, oder, wenn möglich, am Navigationsziel, den Ladezustand der Batterie auffüllen. Die dort beschriebene Erfindung hilft aber nicht, die Reichweitenangst zu verringern, wenn der geplante Routenverlauf bereits ein Erreichen des Ziels mit der vorhandenen Energiemenge ausschließt.

In der DE 10 2014 204 789 A1 wird ein Energiemanagementverfahren und eine entsprechende Vorrichtung für ein Fahrzeug beschrieben, bei dem der Energievorrat im Energiespeicher des Fahrzeugs erfasst, und eine prognostizierte Ist-Reichweite des Fahrzeugs berechnet wird, die durch ein balkenartiges graphisches Objekt visualisiert wird. Auch das geplante Navigationsziel wird visualisiert, und der Nutzer kann auf einen Blick erkennen, ob sich das Navigationsziel innerhalb der visualisierten Ist-Reichweite befindet. Unterschiedliche Farbprofile werden ebenfalls durch entsprechende Veränderung der balkenartigen Anzeige der Ist-Reichweite visualisiert, so dass der Nutzer unmittelbar erkennt, welchen Einfluss ein bestimmtes Fahrprofil auf die Erreichbarkeit des Navigationsziels hat. In der dort beschriebenen Darstellung erfährt der Nutzer allerdings nur, ob ein bestimmtes Navigationsziel unter den aktuellen Umständen erreicht wird, oder nicht, was als negative Visualisierung nicht geeignet ist, die Reichweitenangst zu verringern.

In der europäischen Patentanmeldung EP 2 902 243 A1 wird ein Verfahren und eine Vorrichtung zum Anzeigen von Fahrzeugparametern beschrieben, bei denen der Ladezustand der Fahrzeugbatterie und die umgesetzte Strecke einerseits, und die zur Verfügung stehende Restreichweite andererseits als balkenartige Objekte dargestellt werden. Zusätzliche Elemente visualisieren den Einfluss von Fahrmodus, Fahrtziel und Navigationsroute auf die Restreichweite. Auch hier erhält der Nutzer lediglich eine binäre Information, nämlich ob ein geplantes Navigationsziel erreicht wird, oder nicht.

Die DE 10 2010 051 469 A1 beschreibt ein Anzeigesystem zum Ermitteln und Anzeigen der Reichweite eines Elektrofahrzeugs, mit einem Navigationssystem, das gespeicherte digitalisierte Straßenkarteninformationen aufweist, mit einer Reichweitenermittlungseinheit, durch die ausgehend von einer eingebbaren oder einer vom Navigationssystem erfassten aktuellen Positionsinformation des Elektrofahrzeugs und abhängig von der Restmenge der Energie eines Energiespeichers des Elektrofahrzeugs die Reichweite des Elektrofahrzeugs ermittelbar und einer Anzeigevorrichtung zur Anzeige zuleitbar ist. Die Reichweite ist von der Anzeige visuell unterschiedlich in mindestens drei Reichweitenkategorien darstellbar, wobei eine Reichweitenkategorie eine garantiert erreichbare Reichweite, eine zweite Reichweitenkategorie eine abhängig von Zusatzbedingungen erreichbare Reichweite und eine dritte Reichweitenkategorie eine nicht erreichbare Reichweite ist.

Die EP 2 902 243 A1 beschreibt eine Reichweitenanzeige für ein Fahrzeug. Dabei wird eine Anzeige erzeugt, bei der unterschieden wird, ob der Zielort innerhalb der noch erreichbaren Restreichweite oder nicht mehr innerhalb der Reichweite liegt. Im letzteren Fall wird unterschieden, ob der Zielort bei einer Änderung des Fahrverhaltens noch erreichbar ist. Wenn dies der Fall ist, werden dem Fahrer konkrete Vorschläge zur Reduzierung des Energieverbrauchs angezeigt.

Die DE 10 2012 003 292 A1 beschreibt ein Verfahren und eine Vorrichtung zum Bereitstellen einer Navigationsfunktion in einem Kraftfahrzeug. Bei dem Verfahren wird ein Navigationsziel erfasst und es werden mehrere Einstellungen für Parametersätze bestimmt, die einstellbare Einzelparameter zum Betrieb des Kraftfahrzeugs oder zu der Navigationsroute umfassen, von denen die benötigte Energiemenge des Kraftfahrzeugs für die Fahrt zum erfassten Navigationsziel abhängt.

Der vorliegenden Erfindung liegt daher das technische Problem zugrunde, eine Vorrichtung und ein Verfahren zur Bestimmung und Anzeige der Restreichweite eines Fahrzeugs anzugeben, welche den Nutzer zuverlässig über Restreichweite und Lademöglichkeiten in Bezug auf eine Navigationsroute informiert.

Gelöst wird dieses technische Problem durch die Vorrichtung des Anspruchs 1 und das Verfahren des Anspruchs 2. Vorteilhafte Weiterbildungen der Erfindung sind Gegenstand der abhängigen Ansprüche.

Die Erfindung betrifft demnach ein Verfahren zum Anzeigen der Reichweite eines Fahrzeugs, bei dem wenigstens ein Navigationsziel erfasst wird, ein Ladezustand eines Energiespeichers für eine Antriebseinrichtung des Fahrzeugs erfasst wird, ein Energieverbrauch des Fahrzeugs ermittelt wird, aus dem Ladezustand des Energiespeichers und dem Energieverbrauch des Fahrzeugs eine Ist-Reichweite des Fahrzeugs berechnet wird, die durch eine minimale und eine maximale Reichweite definiert ist, die Ist-Reichweite des Fahrzeugs in einer Reichweitenanzeige visualisiert wird, wobei die Reichweitenanzeige ein graphisches Fahrzeugobjekt, wenigstens ein graphisches Zielobjekt und ein veränderbares graphisches Reichweitenobjekt, das sich von dem Fahrzeugobjekt in Richtung des Zielobjekts erstreckt, umfasst, wobei das graphische Reichweitenobjekt wenigstens einen ersten Abschnitt, der sich von dem Fahrzeugobjekt bis zu einem die minimale Reichweite repräsentierenden Bereich des Reichweitenobjekts erstreckt, und einen zweiten Abschnitt, der sich von dem ersten Abschnitt bis zu einem die maximale Reichweite repräsentierenden Ende des Reichweitenobjekts, erstreckt, umfasst.

Mit dem erfindungsgemäßen Verfahren kann der Nutzer also stets erkennen, ob das Navigationsziel auch bei nicht-verbrauchsoptimierter Fahrweise sicher erreicht wird oder ob eine Anpassung der Fahrweise oder des Fahrmodus erforderlich sind. Moderne Kraftfahrzeuge weisen nämlich üblicherweise verschiedene Fahrmodi auf, die insbesondere bei Elektrofahrzeugen durch die Auswahl entsprechender Fahrmodi zahlreiche Einstellungen der elektrischen Verbraucher eines Fahrzeugs zwischen sportlich, Komfort und ökonomisch ermöglichen. Beispielsweise kann durch eine entsprechend geänderte Regelung der Klimaanlage eines Fahrzeugs der Energieverbrauch drastisch beeinflusst werden. Dies kann der Nutzer dann sofort an entsprechenden Änderungen der minimalen und maximalen Reichweite des graphischen Reichweitenobjektes erkennen.

Im erfindungsgemäßen Verfahren kann der Energiespeicher für die Antriebseinrichtung des Fahrzeugs in unterschiedlichen Ausführungsformen vorliegen. Bei einem Elektrofahrzeug umfasst der Energiespeicher beispielsweise wiederaufladbare Batterien und der Ladezustand entspricht dann dem Ladezustand der Batterien. Bei einem Fahrzeug mit Verbrennungsmotor ist der Energiespeicher beispielsweise ein Benzin-, Diesel- oder Erdgastank und der Ladezustand des Energiespeichers entspricht dem Füllstand des Tanks bzw. dem Fülldruck des Tanks.

Der Energieverbrauch des Fahrzeugs, kann zwar für den momentanen Verbrauch genau gemessen werden. Ebenso kann für die bereits zurückgelegte Strecke der Energieverbrauch genau bestimmt werden und daraus ein mittlere Energieverrauch ermittelt werden. In die Bestimmung der Ist-Reichweite geht jedoch der zukünftige Energieverbrauchs für die restliche Route ein, der nie genau vorhergesagt werden kann. Daher ist die Bestimmung der Ist-Reichweite stets mit einer gewissen Unsicherheit verbunden. Die Ist-Reichweite des Fahrzeugs ist im erfindungsgemäßen Verfahren durch eine minimale und eine maximale Reichweite definiert ist, welche die Unsicherheit der Ist-Reichweite repräsentiert. Die in die minimale und maximale Reichweite eingehende Unsicherheit kann in einer einfachen Ausführungsform der Erfindung beispielsweise über einen prozentualen Anteil der Ist-Reichweite des Fahrzeugs ermittelt werden.

Vorzugsweise werden die obere und untere Grenze der Ist-Reichweite jedoch über eine Abschätzung des zukünftigen Energieverbrauchs des Fahrzeugs ermittelt, der dann durch eine Verbrauchsobergrenze und eine Verbrauchsuntergrenze definiert wird. Je nach gewünschter Genauigkeit der Vorhersage, kann der zukünftige Energieverbrauch unterschiedlich komplex berechnet werden. In einer einfachen Ausführungsform kann der Energieverbrauch des Fahrzeugs beispielsweise ausgehend vom Momentanverbrauch ermittelt werden, wobei die Verbrauchsobergrenze und die Verbrauchsuntergrenze über mögliches Zu- bzw. Abschalten von Energieverbrauchern des Fahrzeugs, beispielsweise in Abhängigkeit vom gewählten Fahrmodus, berechnet werden. Bei einer komplexeren Energieverbrauchsermittlung können beispielsweise auch Navigationsinformationen, beispielsweise der gewählte Streckenverlauf, eventuelle Steigungen und Gefälle im Streckenverlauf, usw. berechnet werden. Auch hier kann der jeweils gewählte Fahrmodus insofern einfließen, als beispielsweise in einem Sportmodus der Energieverbrauch auf der Grundlage einer höheren mittleren Geschwindigkeit und in einem ökonomischen Modus auf der Grundlage einer niedrigeren mittleren Geschwindigkeit berechnet wird. Ferner können beispielsweise auch Echtzeit-Verkehrsinformationen, wie beispielsweise Staus, mittlere Geschwindigkeiten auf einem Streckenabschnitt mit dichterem Verkehr, usw. in die Berechnung des Energieverbrauchs miteinfließen.

Die aus dem Ladezustand des Energiespeichers und dem Energieverbrauch des Fahrzeugs ermittelte Reichweite wird dann entsprechend durch eine minimale und maximale Reichweite definiert, wobei der minimalen Reichweite die Verbrauchsobergrenze des ermittelten Energieverbrauchs und der maximalen Reichweite die Verbrauchsuntergrenze des ermittelten Energieverbrauchs zugrunde gelegt wird.

Die Visualisierung der Ist-Reichweite in einer Reichweitenanzeige erfolgt durch ein graphisches Reichweitenobjekt, das sich von einem Fahrzeugobjekt in Richtung eines Zielobjekts erstreckt, so dass das graphische Reichweitenobjekt typischerweise eine längliche Konfiguration, beispielsweise eine balkenartige oder bandartige Konfiguration besitzt. In der Reichweitenanzeige ist das graphische Reichweitenobjekt die wesentliche Informationsquelle. Das graphische Fahrzeugobjekt und das graphische Zielobjekt können entsprechend einfach gestaltet sein. In einer besonders einfachen Ausführungsform kann das graphische Fahrzeugobjekt beispielsweise durch ein Ende des Reichweitenobjektes und das graphische Zielobjekt durch ein anderes Ende des graphischen Reichweitenobjektes symbolisiert werden. Vorzugsweise werden im Hinblick auf eine eindeutige Darstellung jedoch dezidierte Fahrzeugobjekte und Zielobjekte verwendet. Das Fahrzeugobjekt kann beispielsweise durch ein Fahrzeug-Icon oder ein Pfeil-Icon, die in Richtung des graphischen Reichweitenobjektes zeigen und somit gewissermaßen die Fahrtrichtung symbolisierten, dargestellt werden. Das Zielobjekt kann beispielsweise durch ein Fähnchen-Icon oder ein Haus-Icon symbolisiert werden.

Im erfindungsgemäßen Verfahren ist das graphische Reichweitenobjekt auf seiner Länge zwischen Fahrzeugobjekt und Zielobjekt in zumindest zwei Abschnitte unterteilt. Der erste Abschnitt erstreckt sich von dem Fahrzeugobjekt in Richtung Zielobjekt bis zu einem die minimale Reichweite repräsentierenden Bereich des Reichweitenobjekts, während sich der zweite Abschnitt ausgehend vom Fahrzeugobjekt-fernen Ende des ersten Abschnitts bis zu einem die maximale Reichweite repräsentierenden Ende des Reichweitenobjektes erstreckt. Die im erfindungsgemäßen Verfahren vorgenommene rechnerische Unterteilung des graphischen Reichweitenobjektes in zwei Abschnitte bedeutet aber nicht, dass bei einer navigationsgestützten Zielführung beide Abschnitte auch tatsächlich dargestellt werden müssen. Die Darstellung des Reichweitenobjektes bzw. der Reichweitenanzeige insgesamt hängt in bevorzugten Ausführungsformen des Verfahrens von der aktuellen Navigationssituation ab, wie im Folgenden ausführlicher dargestellt wird. Wenn das Reichweitenobjekt aber mit seinem ersten Abschnitt und seinem zweiten Abschnitt visualisiert wird, dann werden beide Abschnitte jedenfalls graphisch unterschiedlich visualisiert, so dass der Nutzer den ersten Abschnitt des Reichweitenobjektes klar vom zweiten Abschnitt des Reichweitenobjektes unterscheiden kann. Die Länge des ersten und zweiten Abschnitts des graphischen Reichweitenobjektes können an die prozentualen Anteile der minimalen Reichweite und der maximalen Reichweite angelehnt werden, wenn die Gesamtlänge des graphischen Reichweitenobjektes der maximalen Reichweite entspricht. Es kann jedoch auch eine abstraktere Darstellung gewählt werden, bei der der erste Abschnitt und der zweite Abschnitt lediglich im Kontext der konkreten Navigationssituation repräsentiert werden, so dass aus der Länge des ersten Abschnitts und der Länge des zweiten Abschnitts nicht zwingend auf prozentuale Anteile bezüglich der maximalen Reichweite geschlossen werden kann, der Nutzer aber eindeutigere Informationen bezüglich der Erreichbarkeit des Navigationsziels bzw. eventueller Zwischenziele erhält. Der Abstand zwischen Fahrzeugobjekt und Zielobjekt symbolisiert in dem graphischen Reichweitenobjekt die noch vom Fahrzeug zurückzulegende Entfernung. Auch hier können die Länge der beiden Abschnitte des graphischen Reichweitenobjektes wieder in einer prozentualen Relation zur zurückzulegenden Strecke dargestellt werden. Bevorzugt wird jedoch eine abstrakte Darstellung gewählt, bei der lediglich zum Ausdruck gebracht wird, dass das Zielobjekt mit minimaler Reichweite erreichbar ist, wenn also das Zielobjekt im ersten Abschnitt des graphischen Reichweitenobjektes liegt, oder mit maximaler Reichweite, also wenn das Objekt im zweiten Abschnitt des graphischen Reichweitenobjektes liegt, oder mit dem aktuellen Ladzustand gar nicht erreichbar ist, also das Zielobjekt außerhalb des Reichweitenobjektes liegt, insbesondere weiter von dem Fahrzeugobjekt entfernt ist als das die maximale Reichweite repräsentierende Ende des Reichweitenobjektes.

Das erfindungsgemäße Verfahren ist vorzugsweise so optimiert, dass dem Nutzer die so genannte Reichweitenangst weitgehend genommen wird. Besonders nachdrücklich ist dies der Fall, wenn die Reichweitenanzeige gar nicht erst erscheint. In diesem Fall kann der Nutzer davon ausgehen, dass das gewählte Navigationsziel sicher erreicht wird. Gemäß einer bevorzugten Ausführungsform des erfindungsgemäßen Verfahrens wird daher die Reichweitenanzeige nicht angezeigt, wenn die Entfernung zum Ziel kleiner als die minimale Reichweite ist, bzw. in der dann allerdings nicht angezeigten graphischen Darstellung, wenn das Navigationsziel in dem ersten Abschnitt des Reichweitenobjektes liegt. Das Nicht-Erscheinen der Reichweitenanzeige signalisiert dem Nutzer daher, dass für die gewählte Fahrt keine Probleme mit dem Energiemanagement zu erwarten sind und sich der Nutzer daher auch überhaupt nicht um eine eventuelle Reichweitenproblematik kümmern muss. Unabhängig von der nach dem erfindungsgemäßen Verfahren vorgesehenen Reichweitenanzeige wird jedoch auch in diesem Szenario typischerweise zumindest ein Lade-Icon angezeigt, das dem Nutzer den Ladezustand des Energiespeichers signalisiert, da sich sonst der Nutzer eher Sorgen machen würde, ob nicht ein Funktionsfehler der Reichweitenanzeige vorliegt.

In einer Variante des erfindungsgemäßen Verfahrens kann die Reichweitenanzeige jedoch auch dann angezeigt werden, wenn die Entfernung zum Navigationsziel geringer als die minimale Reichweite ist. In diesem Fall liegt das Zielobjekt im ersten Abschnitt des Reichweitenobjektes. In der graphischen Darstellung bedeutet dies natürlich nicht, dass das Zielobjekt zwingend innerhalb des Reichweitenobjektes symbolisiert werden muss. Es genügt beispielsweise auch eine Darstellung, bei der das Zielobjekt neben dem Reichweitenobjekt symbolisiert wird, so lange eine eindeutige Zuordnung, ob sich das Zielobjekt im ersten Abschnitt oder im zweiten Abschnitt oder außerhalb des Reichweitenobjektes befindet, eindeutig möglich ist. Bevorzugt wird bei dieser Variante des Verfahrens der zweite Abschnitt des Reichweitenobjektes nicht visualisiert, da er einerseits für die gewählte Route keine Zusatzinformation enthält, sondern dem Nutzer durch Fehlen des zweiten Abschnitts die positive Rückmeldung vermittelt wird, dass Sorgen über das Energiemanagement für die aktuelle Route unbegründet sind.

In jedem Fall wird im erfindungsgemäßen Verfahren die Reichweitenanzeige angezeigt, wenn die Entfernung zum Navigationsziel größer als die minimale Reichweite ist. Dann kann beispielsweise der Fall eintreten, dass der Nutzer durch vorausschauendes Energiemanagement das Reiseziel dennoch erreichen kann.

Eine Erreichbarkeit des Navigationsziels ist beispielsweise dann möglich, wenn die Entfernung zum Navigationsziel zwar größer als die minimale Reichweite aber geringer als die maximale Reichweite ist. In diesem Fall werden erfindungsgemäß der erste und zweite Abschnitt des Reichweitenobjekts angezeigt, wobei das Zielobjekt dann im zweiten Abschnitt des Reichweitenobjektes liegt. Der Nutzer erhält dann also die Information, dass ein energiesparender Betriebsmodus und/oder eine energiesparende Fahrweise erforderlich sind, um das Navigationsziel zu erreichen. Im Laufe der weiteren Fahrt werden erster und zweiter Abschnitt des Reichweitenobjektes anhand der aktuellen Fahrzeugdaten und des Routenverlaufs dynamisch angepasst, so dass nach einer gewissen Fahrtstrecke der Fall eintreten kann, dass das Navigationsziel wieder im Bereich der minimalen Reichweite landet, so dass auf die oben beschriebenen Darstellungsmodi, bei denen die Entfernung zum Navigationsziel geringer als die minimale Reichweite ist, zurückgegriffen werden kann.

So lange sich das Navigationsziel aber im Bereich des zweiten Abschnitts des Reichweitenobjektes befindet, liegt eine Situation vor, die typischerweise mit der Reichweitenangst assoziiert wird. In diesem Fall wird eine Ladestation, also beispielsweise eine Tankstelle für Fahrzeuge mit Verbrennungsmotoren oder eine elektrische Ladestation für Elektrofahrzeuge, als Zwischenziel im ersten Abschnitt des Reichweitenobjektes angezeigt wird, deren Entfernung zum Fahrzeug also geringer als die minimale Reichweite ist. Auf diese Weise wird dem Nutzer auch bei unsicherer Erreichbarkeit des Navigationsziels die Sicherheit vermittelt, dass zumindest eine Lademöglich für den Energiespeicher besteht, die problemlos auch bei hohem Energieverbrauch erreichbar ist. Auf diese Weise kann eine Reichweitenangst gar nicht erst auftreten. Bei der Ladestation kann es sich beispielsweise um eine Ladestation auf der gewählten Route handeln, die beispielsweise anhand von im Navigationssystem vorhandenen oder online abrufbaren Daten ermittelt wird. Eine solche Ladestation auf der gewählten Route kann auch permanent angezeigt werden, also auch dann, wenn sich das Navigationsziel im ersten Abschnitt des Reichweitenobjektes befindet, und besonders bevorzugt dann, wenn sich die Ladestation in der Nähe des Navigationsziels befindet, um so dem Nutzer zu signalisieren, dass trotz sicherer Erreichbarkeit des Navigationsziels eine Lademöglichkeit für den Energiespeicher besteht, falls dies gewünscht wird. Ladestationen als Zwischenziele auf der Navigationsroute können auch manuell hinterlegt werden, beispielsweise wenn der Nutzer ohnehin einen Zwischenstopp, beispielsweise an einer Raststätte mit Lademöglichkeit, ins Auge fasst.

Wenn die Entfernung des Fahrzeugs zum Navigationsziel größer als die minimale Reichweite, aber geringer als die maximale Reichweite ist, kann auch der Fall eintreten, dass auf der berechneten Route keine Ladestation zur Verfügung steht, deren Entfernung zum Fahrzeug geringer als die minimale Reichweite ist. Da sich dann keine Ladestation mehr im ersten Abschnitt des Reichweitenobjektes befindet, bestünde wieder die Gefahr der Reichweitenangst. Es wird dann durch Neuberechnung der gewählten Route zum Navigationsziel eine Ladestation gesucht, deren Entfernung auf der neu berechneten Route geringer als die minimale Reichweite ist. Eine solche Neuberechnung der Route zum Ansteuern einer nahe gelegenen Ladestation wird automatisch initiiert, wenn die Entfernung zum Navigationsziel größer als die minimale Reichweite ist. Als Kriterium für eine Neuberechnung der Route kann auch das Verhältnis von Ziel-Ladestand und Reichweite herangezogen werden, das für eine Neuberechnung kleiner oder gleich einer vorgegebenen Multistopp-Neuberechnungshysterese oder - Neuberechnungsschwelle sein kann. Eine solche Neuberechnungsschwelle kann auch bezogen auf die minimale Reichweite implementiert werden, so dass beispielsweise nicht bei sofortiger Überschreitung der minimalen Reichweite eine Neuberechnung ausgelöst wird, da in diesem Fall häufig durch geringe Änderungen des Fahrverhaltens die zur Erreichung des Navigationsziels erforderliche Energie eingespart werden kann. Durch geeignete Änderung der graphischen Darstellung des zweiten Abschnitts und/oder des ersten Abschnitts des graphischen Reichweitenobjektes wird dem Nutzer jedoch signalisiert, dass in Kürze eine Neuberechnung ansteht, die dann tatsächlich durchgeführt wird, wenn die Entfernung zum Navigationsziel um einen bestimmten Schwellwert oberhalb der minimalen Reichweite überschritten wird.

Bei einer Variante des erfindungsgemäßen Verfahrens kann man zusätzlich zur visuellen Reichweitenanzeige auch einen oder mehrere akustische Hinweise erzeugen, wenn die Entfernung zu dem Navigationsziel größer als die minimale Reichweite wird. Der Nutzer erhält so einen zusätzlichen Hinweis darauf, dass eine Energieeinsparung auf dem Rest der Route und/oder ein Ladestopp auf der Route bzw. durch eine Neuberechnung der Route erforderlich wird. Ebenso kann die dann durchgeführte Neuberechnung der Route zusätzlich akustisch signalisiert werden.

Das erfindungsgemäße Verfahren kommt besonders bevorzugt zum Einsatz, wenn eine über die Reichweite des Fahrzeugs hinausgehende Zielführung geplant wird, also ein Ladestopp zwingend erforderlich ist.

Bei dem "Navigationsziel" im Sinne der vorliegenden Erfindung muss es sich also nicht zwangsläufig um das Endziel der geplanten Route handeln. Wenn nämlich das Endziel bereits außerhalb der Reichweite des Fahrzeugs liegt, kann es sich bei dem Navigationsziel im erfindungsgemäßen Verfahren auch um einen manuell vom Nutzer oder automatisch vom Navigationssystem geplanten Ladestopp handeln. Darüber hinaus können in dem erfindungsgemäßen Verfahren weitere Zwischenziele visualisiert werden, beispielsweise vom Nutzer geplante Zwischenziele, die dann auch bei einer Routenänderung zum Ansteuern eines näher liegenden Ladestopps zwingend eingehalten werden und/oder auf der Route liegende so genannte Points of Interest, die aber bei einer Neuberechnung der Route nicht zwingend angefahren werden.

Vorzugsweise wird das Reichweitenobjekt als längliches balkenartiges oder bandartiges Objekt visualisiert.

Die ersten und zweiten Abschnitte des graphischen Reichweitenobjektes können auf unterschiedlichste Weise visualisiert werden, wobei vorzugsweise darauf geachtet wird, dass der erste Abschnitt eine positive, bekräftigende Information vermittelt, also beispielsweise in gesättigten, kraftvollen Farben dargestellt wird. Der zweite Abschnitt symbolisiert eine gewisse Unsicherheit in der Erreichbarkeit des Navigationsziels, was auch durch seine graphische Darstellung vermittelt werden kann, beispielsweise durch Verwendung von ausgeblichenen oder verwaschenen Farben. Der Übergang vom ersten in den zweiten Abschnitt des graphischen Reichweitenobjektes muss nicht abrupt sein, sondern es kann auch ein allmählicher Übergang vom ersten in den zweiten Abschnitt visualisiert werden.

Die Erfindung betrifft außerdem eine Vorrichtung zum Anzeigen der Reichweite eines Fahrzeugs, umfassend:
eine Einrichtung zum Erfassen von Navigationszielen,
eine Einrichtung zum Erfassen des Ladezustands eines Energiespeichers des Fahrzeugs,
eine Einrichtung zum Ermitteln des Energieverbrauchs des Fahrzeugs
eine Anzeigefläche zum Darstellen einer Reichweitenanzeige und
eine Steuereinheit, welche mit der Einrichtung zum Erfassen von Navigationszielen, der Einrichtung zum Erfassen des Ladezustandes, der Einrichtung zum Ermitteln des Energieverbrauchs des Fahrzeugs und der Anzeigefläche verbunden ist, wobei die Steuereinheit aus dem Ladezustand des Energiespeichers und dem Energieverbrauch des Fahrzeugs eine Ist-Reichweite des Fahrzeugs berechnet, die durch eine minimale und eine maximale Reichweite definiert ist und die Ist-Reichweite des Fahrzeugs in einer Reichweitenanzeige visualisiert, wobei die Reichweitenanzeige ein graphisches Fahrzeugobjekt, wenigstens ein graphisches Zielobjekt und ein veränderbares graphisches Reichweitenobjekt, das sich von dem Fahrzeugobjekt in Richtung des Zielobjekts erstreckt, umfasst und wobei das graphische Reichweitenobjekt wenigstens einen ersten Abschnitt, der sich von dem Fahrzeugobjekt bis zu einem die minimale Reichweite repräsentierenden Bereich des Reichweitenobjekts erstreckt, und einen zweiten Abschnitt, der sich von dem ersten Abschnitt bis zu einem die maximale Reichweite repräsentierenden Ende des Reichweitenobjekts erstreckt, umfasst.

Die Anzeigefläche für die Reichweitenanzeige kann beispielsweise in das Display einer Navigationsvorrichtung integriert sein, d. h. neben einer üblichen Kartendarstellung wird die erfindungsgemäße Reichweitenanzeige eingeblendet. Es ist jedoch auch möglich, die Reichweitenanzeige als separate Anzeige, beispielsweise im Bereich des Kombiinstruments vorzusehen.

Das erfindungsgemäße Verfahren und die erfindungsgemäße Vorrichtung können in unterschiedlichsten Fahrzeugen eingesetzt werden, wobei der Einsatz in elektrisch oder teilelektrisch betriebenen Fahrzeugen besonders bevorzugt ist. Bei den Fahrzeugen kommen nicht nur Personenkraftwagen, Busse oder LKWs in Frage, sondern auch Elektromotorräder oder elektrische Fahrräder.

Im Folgenden wird die Erfindung anhand von Ausführungsbeispielen unter Bezugnahme auf die beigefügten Zeichnungen ausführlicher erläutert.
- Figur 1: zeigt ein Ausführungsbeispiel der erfindungsgemäßen Vorrichtung in einem Fahrzeug,
- Figuren 2a und 2b: zeigen beispielhaft eine Anzeige auf einer Anzeigeeinheit der erfindungsgemäßen Vorrichtung aus Figur 1 in einem ersten Zustand bzw. in einem zweiten Zustand,
- Figuren 3a und 3b: zeigen Darstellungsvarianten der erfindungsgemäßen Reichweitenanzeige, bei denen ein Navigationsziel erreicht wird,
- Figuren 4a und 4b: zeigen Darstellungsvarianten der erfindungsgemäßen Reichweitenanzeige, bei denen ein Navigationsziel nicht mit Sicherheit erreicht wird,
- Figuren 5a bis 5c: zeigen Darstellungsvarianten der erfindungsgemäßen Reichweitenanzeige für eine Multistopp-Routenplanung

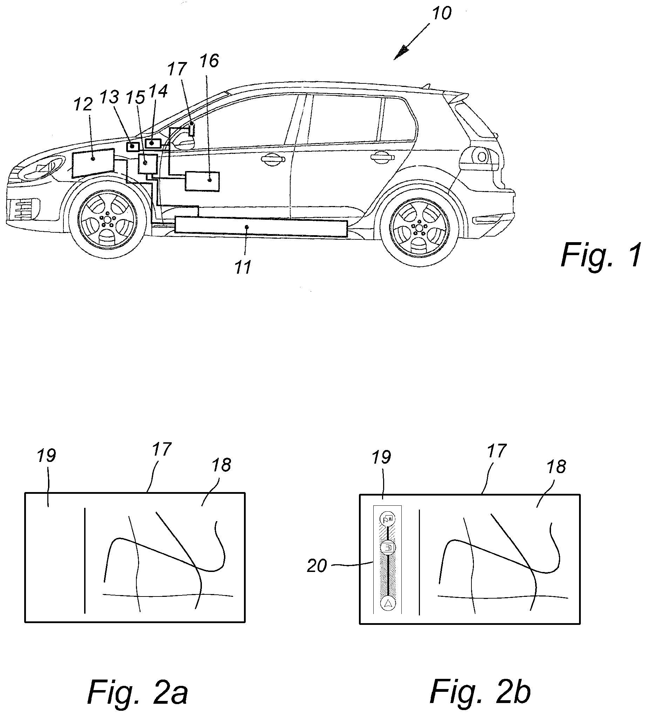

Unter Bezugnahme auf Figur 1 wird ein Ausführungsbeispiel der erfindungsgemäßen Vorrichtung in einem Fahrzeug dargestellt. In der dargestellten Ausführungsform ist das Fahrzeug 10 ein Elektrofahrzeug, das einen Energiespeicher 11 in Form einer wiederaufladbaren Batterie aufweist. Über die Batterie 11 werden zahlreiche Verbraucher des Fahrzeugs 10 gespeist, insbesondere eine Antriebseinheit 12 und weitere Verbraucher, von denen eine Klimaanlage 13 und ein Navigations- und Infotainmentsystem 14 beispielhaft dargestellt sind. Ferner ist eine Ermittlungseinrichtung 15 vorgesehen, welche den Ladezustand des Energiespeichers 11 und den Energieverbrauch des Fahrzeugs 10 ermittelt. Über die Navigationseinrichtung 14 wird ein Navigationsziel erfasst sowie die Entfernung des Fahrzeugs 10 von dem Navigationsziel gemäß einer automatisch vorgegebenen oder über Zwischenziele festgelegten Route ermittelt. Eine Steuereinrichtung 16 erhält von der Ermittlungseinrichtung 15 die Informationen über den Ladezustand und den Verbrauch des Fahrzeugs und über die Navigationseinrichtung 14 die Informationen über die gewählte Route, insbesondere die Entfernung zu einem Navigationsziel. In der Steuereinrichtung 16 wird die Ist-Reichweite des Fahrzeugs ermittelt und eine Reichweitenanzeige generiert, die auf einer Anzeigevorrichtung 17 visualisiert wird.

Die Ist-Reichweite des Fahrzeugs wird durch eine minimale und eine maximale Reichweite charakterisiert. Die minimale und die maximale Reichweite des Fahrzeugs werden auf der Grundlage des Ladezustands des Energiespeichers berechnet. In einer sehr einfachen Darstellung entsprechen die minimale und die maximale Reichweite einer Unsicherheit der prognostizierten Ist-Reichweite, die auf dem Energieverbrauch und dem erwarteten Energieverbrauch auf der Route beruhen. Je mehr Informationen in die Berechnung der minimalen und der maximalen Reichweite einfließen, desto geringer werden die entsprechenden Unsicherheiten. Auf einer gewählten Route werden jedoch stets größere Vorhersageunsicherheiten verbleiben, denn beispielsweise können Fahrverhalten, äußere Einflüsse wie beispielsweise starker Gegenwind und Ähnliches oft nur schlecht prognostiziert werden. Beim Befahren einer Route kann sich daher sowohl die minimale als auch die maximale Reichweite verändern.

In den Figuren 2a und 2b ist die Anzeigeeinrichtung 17 in zwei unterschiedlichen Zuständen dargestellt. Bei der Anzeigeeinrichtung 17 kann es sich beispielsweise um das Display eines herkömmlichen Infotainmentsystems, beispielsweise um das Display des Navigationssystems handeln.

In Figur 2a ist die Anzeigeeinrichtung 17 in einem ersten Zustand dargestellt, in dem in einem ersten Bereich 18 eine herkömmliche Kartendarstellung vorgesehen ist, während ein zweiter Bereich 19 für dynamisch einblendbare Zusatzinformationen, wie beispielsweise eine erfindungsgemäße Reichweitenanzeige 20 vorgesehen ist. Die erfindungsgemäße Reichweitenanzeige kann jedoch auch an anderen Stellen im Cockpit des Fahrzeugs 10 vorgesehen sein.

In der Darstellung der Figur 2a wird angenommen, dass sich das Navigationsziel in einer Entfernung vom Fahrzeug befindet, die geringer ist als die minimale Reichweite des Fahrzeugs. Gemäß einer Ausführungsform der Erfindung wird vorgeschlagen, in einem solchen Fall die erfindungsgemäße Reichweitenanzeige nicht anzuzeigen, da in einem solchen Fall kein Erfordernis besteht, in das Energiemanagement des Fahrzeugs einzugreifen oder durch eine sparsame Fahrweise die Reichweite zu maximieren, um ein Navigationsziel noch zu erreichen. Da bei Elektrofahrzeugen üblicherweise auch ein dauerhaft sichtbares Instrument den Ladezustand des Energiespeichers anzeigt, ist eine detaillierte Berücksichtigung der Reichweitenanzeige in diesem Fall nicht erforderlich.

Figur 2b zeigt eine Variante der Anzeigevorrichtung 17 in einem Zustand, in dem das Erreichen des Navigationsziels nicht sichergestellt ist. In diesem Fall ist bei der beschriebenen Ausführungsform vorgesehen, dass die Reichweitenanzeige 20 in dem Feld 19 der Anzeigevorrichtung 17 eingeblendet wird. Die Reichweitenanzeige 20 wird im Folgenden in unterschiedlichen Darstellungsvarianten näher beschrieben.

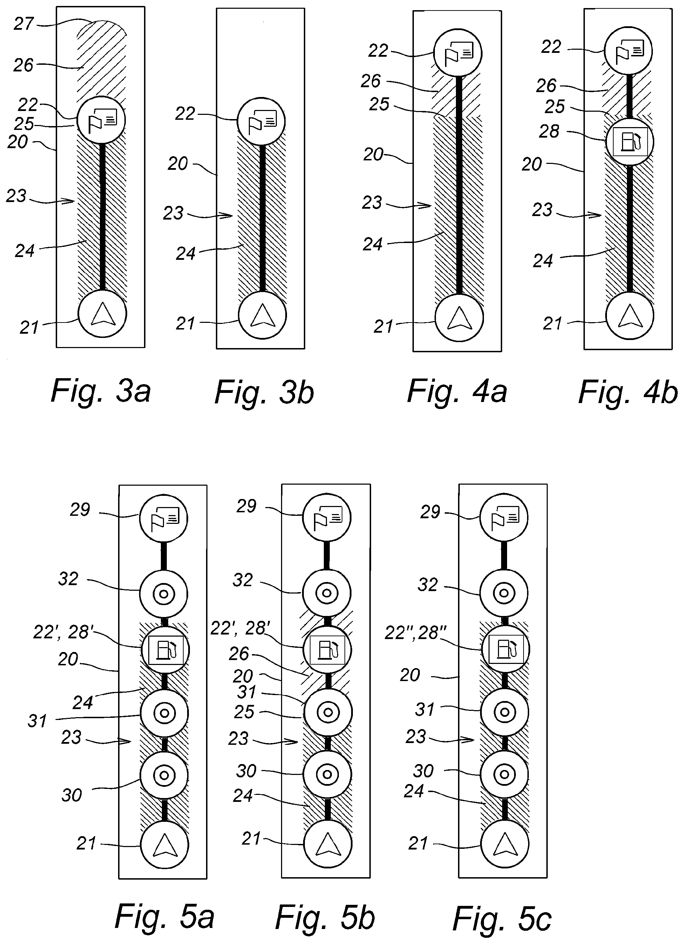

Figur 3a zeigt schematisch eine erste Darstellungsvariante der erfindungsgemäßen Reichweitenanzeige 20. Die Reichweitenanzeige 20 umfasst ein Fahrzeugobjekt 21, welches die Position des Fahrzeugs 10 symbolisiert und ein Zielobjekt 22, welches ein Navigationsziel symbolisiert. Bei dem Zielobjekt 22 kann es sich um das Endziel einer Navigationsroute, ein Zwischenziel oder einen automatisch berechneten oder manuell eingefügten Ladestopp handeln. Die Reichweitenanzeige 20 umfasst ferner ein veränderbares graphisches Reichweitenobjekt 23, das einen ersten Abschnitt 24 umfasst, der sich von dem Fahrzeugobjekt 21 in Richtung Zielobjekt 22 bis zu einer, vom Fahrzeugobjekt entfernten Grenzregion 25 des ersten Abschnitts 24 erstreckt, der die minimale Reichweite des Fahrzeugs repräsentiert. An die erste Grenzregion 25 schließt sich ein zweiter Abschnitt 26 des Reichweitenobjekts 23 an, der sich bis zu einer die maximale Reichweite repräsentierenden Endregion 27 des Reichweitenobjekts erstreckt, die am weitesten von dem Fahrzeugobjekt 21 entfernt ist. Obwohl die Grenzregion 25 und die Endregion 27 des Reichweitenobjekts in den schematischen Zeichnungen mit scharfen Grenzen dargestellt sind, können in anderen Darstellungsvarianten und Übergänge oder verwaschene Grenzen vorgesehen sein.

In dem in Figur 3a dargestellten Beispiel ist die Entfernung des Zielobjekts 22 vom Fahrzeug geringer als die minimale Reichweite, so dass das Zielobjekt 22 in dem ersten Abschnitt 24 des Reichweitenobjekts 23 dargestellt wird. Für diese Situation ist in Figur 3b eine bevorzugte alternative Darstellung gezeigt: Da die Darstellung des zweiten Abschnitts 26 in dieser Situation keine Zusatzinformation für den Nutzer mit sich bringt, wird vorzugsweise in dem Fall, dass das Reichweitenobjekt 22 auch unter Zugrundelegung der minimalen Reichweite erreicht wird, lediglich der erste Abschnitt 24 dargestellt und der zweite Abschnitt 26 ausgeblendet.

Wie in Figur 3a und den folgenden Figuren gezeigt, werden die beiden Abschnitte 24 und 26 des Reichweitenobjekts 23 unterschiedlich visualisiert, was in den vorliegenden Darstellungen durch eine unterschiedlich dichte Schraffur wiedergegeben wird.

In Figur 4a und 4b ist eine Situation dargestellt, in der das Zielobjekt 22 nicht mehr mit Sicherheit erreicht werden kann, da die Entfernung des Zielobjekts 22 größer als die minimale Reichweite aber kleiner als die maximale Reichweite ist. Wie in Figur 4a dargestellt, befindet sich in diesem Fall das Zielobjekt 22 in dem zweiten Abschnitt 26 des Reichweitenobjekts 23. Die Darstellung der Figur 4a kann sich beispielsweise aus der Darstellung der Figur 3b entwickeln, wenn durch eine besonders dynamische Fahrweise, die zu deutlich höherem Verbrauch als im bisherigen Fahrverlauf führt, die ursprünglich errechnete minimale Reichweite nicht mehr erzielt werden kann. Durch die Darstellung der Figur 4a wird der Nutzer daher darauf hingewiesen, dass ein energiesparender Betrieb des Fahrzeugs als der aktuelle Betrieb erforderlich ist, um das Navigationsziel 22 zu erreichen. Die graphische Darstellung des Reichweitenobjekts 23 kann gegebenenfalls zusätzlich mit akustischen Warnhinweisen unterlegt werden. Wenn die Entfernung des Zielobjekts 22 die minimale Reichweite 25 nur geringfügig überschreitet, kann durch einfache Eingriffe in die Fahrweise und/oder das Energiemanagement des Fahrzeugs eine Verringerung des Energieverbrauchs erreicht werden, so dass die Anzeige rasch wieder in den Zustand der Figur 3b überwechseln wird.

Falls auf der gewählten Route eine Ladestation vorhanden ist, deren Entfernung geringer als die minimale Reichweite ist, wird diese vorzugsweise ebenfalls visualisiert. Die entsprechende Darstellung der Reichweitenanzeige, bei der sich eine durch das Ladestationsobjekt 28 visualisierte Ladestation im ersten Abschnitt 24 des Reichweitenobjekts 23 befindet, ist in Figur 4b dargestellt. In dieser Darstellung erhält der Nutzer also die positive Gewissheit, dass trotz unsicherer Erreichbarkeit des Navigationsziels 22 eine weitere Ladestation 28 sicher erreicht werden kann. Wenn sich keine Ladestation, deren Entfernung geringer als die minimale Reichweite ist, auf der aktuell gewählten Route befindet, wird zunächst keine Ladestation visualisiert (Figur 4a). Durch entsprechende Animation des ersten Abschnitts 24 und/oder des zweiten Abschnitts 26 des Reichweitenobjekts 23 kann jedoch signalisiert werden, dass eine Neuberechnung der Route durchgeführt wird, um zu gewährleisten, dass eine Ladestation innerhalb der minimalen Reichweite angesteuert werden kann. Die Darstellung der Figur 4a geht dann animiert in die Darstellung der Darstellung der Figur 4b über.

In den Figuren 5a bis 5c ist eine Variante der Darstellung des erfindungsgemäßen Reichweiteobjekts gezeigt, bei der eine so genannte Multistopp-Route geplant wird. Hierbei ist das Zielobjekt 22', welches innerhalb der Reichweite des Fahrzeugs ist, nicht das Endziel der Route, sondern beispielsweise eine auf der Route zwingend vorgesehene Ladestation, da die Entfernung zu dem durch das Endzielobjekt 29 visualisierte Endziel der Route größer als die maximale Reichweite des Fahrzeugs ist. Das Navigationszielobjekt 22', welches die Darstellung des Reichweitenobjekts 23 beeinflusst, ist in diesem Fall lediglich ein Zwischenziel auf der Route. Wenn es sich bei dem Zwischenzielobjekt 22', wie in den Figuren 5a bis 5c, lediglich um einen Ladestopp 28' handelt, ist das Zwischenziel 22' dynamisch veränderbar, das heißt, bei einer dynamischen Routenplanung muss dieses Zwischenziel nicht zwingend angefahren werden, sondern der Ladestopp kann beispielsweise bei geändertem Energieverbrauch auch durch Neuplanung der Route durch einen anderen Ladestopp auf der geänderten Route ersetzt werden. Im dargestellten Beispiel enthält die geplante Route noch weitere Zwischenziele, die durch die Zwischenzielobjekte 30, 31, 32, visualisiert wird und bei denen es sich beispielsweise um fest geplante Zwischenziele handeln kann, die auch bei geänderter Routenplanung angefahren werden müssen, oder um so genannte Points of Interest auf der aktuellen Route, die bei einer Änderung der Routenplanung nicht angefahren werden müssen.

Im dargestellten Beispiel wird in der Figur 5a der Ladestopp 22',28' noch sicher erreicht, liegt also innerhalb des ersten Abschnitts des Reichweitenobjekts 23. Der zweite Abschnitt 26 wird daher in Figur 5a nicht dargestellt. Durch plötzlich erhöhten Energieverbrauch ist in Figur 5b das Erreichen des Ladestopps 22',28 nicht mehr gewährleistet, d. h. das Reichweitenobjekt 23 wird mit seinen beiden Abschnitten 24 und 26 dargestellt, wobei der Ladestopp 22',28' sich nun im zweiten Abschnitt 26 befindet. Sollte die Entfernung zum Ladestopp 22',28' immer größer werden und damit die Erreichbarkeit des Ladestopps 22',28' immer unwahrscheinlicher werden, so wird ab einer bestimmten Schwelle eine Neuberechnung der Route durchgeführt, um auf der neuen Route eine Ladestation 22",28" zu erreichen, die noch innerhalb der minimalen Reichweite des Fahrzeugs liegt. In diesem Fall geht die Darstellung der Figur 5b in die Darstellung der Figur 5c über, wo wiederum lediglich der erste Abschnitt 24 des Reichweitenobjekts dargestellt wird. Die nun im ersten Abschnitt 24 liegende Ladestation 22",28" ist aber aufgrund der Neuberechnung der Route eine andere Ladestation 22',28'als die Ladestation in den Figuren 5a und 5b. In der Kartendarstellung des Navigationssystems des Fahrzeugs (hier nicht dargestellt) wird der geänderte Routenverlauf natürlich entsprechend angepasst. In der hier gezeigten abstrakten Darstellung einer Reichweitenanzeige ändert sich der grundsätzliche Aufbau der Reichweitenanzeige durch die Routenneuberechnung nicht. Insbesondere sind bei der hier dargestellten Variante die Entfernungen zwischen Fahrzeugobjekt und den einzelnen Zwischenzielen 30, 31, 22', 22" und 32 bis zum Endziel 29 nicht maßstabsgetreu. In anderen Ausführungsformen der erfindungsgemäßen Reichweitenanzeige können jedoch auch Informationen über die Entfernungsrelationen in die Darstellung einfließen.

### Bezugszeichenliste

- 10: Fahrzeug
- 11: Energiespeicher, Batterie
- 12: Antriebseinheit
- 13: Klimaanlage
- 14: Navigations- und Infotainmentsystem
- 15: Ermittlungseinrichtung
- 16: Steuereinrichtung
- 17: Anzeigevorrichtung
- 18: erster Bereich der Anzeigevorrichtung
- 19: zweiter Bereich der Anzeigevorrichtung
- 20: Reichweitenanzeige
- 21: Fahrzeugobjekt
- 22, 22', 22": Zielobjekt
- 23: Reichweitenobjekt
- 24: erster Abschnitt des Reichweitenobjekts
- 25: Grenzregion des ersten Abschnitts
- 26: zweiter Abschnitt des Reichweitenobjekts
- 27: Endregion des Reichweitenobjektes
- 28, 28',28": Ladestationobjekt
- 29: Endzielobjekt
- 30, 31, 32: Zwischenzielobjekt

## Patentansprüche

1. Vorrichtung zum Anzeigen der Reichweite eines Fahrzeugs (10), umfassend
eine Einrichtung (14) zum Erfassen von Navigationszielen und zum Berechnen einer Route zum Navigationsziel,
eine Einrichtung (15) zum Erfassen des Ladezustands eines Energiespeichers (11) des Fahrzeugs (10),
wobei bei einem Fahrzeug (10) mit einem Verbrennungsmotor der Energiespeicher (11) ein Kraftstofftank ist, bei einem Fahrzeug mit einem Elektromotor eine wiederaufladbare Batterie zum Einsatz kommt und bei einem Hybridfahrzeug ein Verbrennungsmotor mit einem Kraftstofftank und ein Elektromotor mit einer wiederaufladbaren Batterie eingesetzt werden und der Ladezustand bei einem Fahrzeug (10) mit einem Verbrennungsmotor dem Füllstand des Tanks oder dem Fülldruck des Tanks entspricht und bei einem Fahrzeug mit einem Elektromotor dem Ladezustand der Batterie entspricht,
eine Einrichtung zum Ermitteln des Energieverbrauchs des Fahrzeugs,
eine Anzeigefläche zum Darstellen einer Reichweitenanzeige und
eine Steuereinheit (16), welche mit der Einrichtung (14) zum Erfassen von Navigationszielen, der Einrichtung (15) zum Erfassen des Ladezustandes, der Einrichtung zum Ermitteln des Energieverbrauchs des Fahrzeugs und der Anzeigefläche verbunden ist, wobei die Steuereinheit (16) aus dem Ladezustand des Energiespeichers (11) und dem Energieverbrauch des Fahrzeugs eine Ist-Reichweite des Fahrzeugs (10) berechnet, die durch eine minimale und eine maximale Reichweite definiert ist,
wobei eine obere und untere Grenze der Ist-Reichweite über eine Abschätzung des zukünftigen Energieverbrauchs des Fahrzeugs (10) ermittelt wird, der dann durch eine Verbrauchsobergrenze und eine Verbrauchsuntergrenze definiert wird und der minimalen Reichweite die Verbrauchsobergrenze des ermittelten Energieverbrauchs und der maximalen Reichweite die Verbrauchsuntergrenze des ermittelten Energieverbrauchs zugrunde gelegt wird,
wobei die Ist-Reichweite des Fahrzeugs (10) in der Reichweitenanzeige visualisiert wird, wobei die Reichweitenanzeige ein graphisches Fahrzeugobjekt, wenigstens ein graphisches Zielobjekt und ein veränderbares graphisches Reichweitenobjekt, das sich von dem Fahrzeugobjekt in Richtung des Zielobjekts erstreckt, umfasst und wobei das graphische Reichweitenobjekt wenigstens einen ersten Abschnitt, der sich von dem Fahrzeugobjekt bis zu einem die minimale Reichweite repräsentierenden Bereich des Reichweitenobjekts erstreckt, und einen zweiten Abschnitt, der sich von dem ersten Abschnitt bis zu einem die maximale Reichweite repräsentierenden Ende des Reichweitenobjekts erstreckt, umfasst,
wobei der erste Abschnitt und der zweite Abschnitt des Reichweitenobjektes angezeigt werden, wenn die Entfernung zum Navigationsziel geringer als die maximale Reichweite ist, wobei das Zielobjekt im zweiten Abschnitt des Reichweitenobjektes liegt,
wobei eine Ladestation, also eine Tankstelle für Fahrzeuge mit Verbrennungsmotoren, oder eine elektrische Ladestation für Elektrofahrzeuge, als Zwischenziel im ersten Abschnitt des Reichweitenobjektes angezeigt wird, deren Entfernung zum Fahrzeug (10) geringer als die minimale Reichweite ist,
wobei die Vorrichtung ausgebildet ist, durch Neuberechnung der Route zum Navigationsziel eine Ladestation zu suchen, deren Entfernung auf der neu berechneten Route geringer als die minimale Reichweite ist, wenn die Entfernung des Fahrzeugs (10) zum Navigationsziel größer als die minimale Reichweite, aber geringer als die maximale Reichweite ist, und auf der berechneten Route keine Ladestation zur Verfügung steht, deren Entfernung zum Fahrzeug (10) geringer als die minimale Reichweite ist und
wobei eine Ladestation, deren Entfernung zum Fahrzeug (10) geringer als die minimale Reichweite ist, durch Neuberechnung der Route als Zwischenziel ermittelt wird, wobei dem Nutzer durch Änderung der graphischen Darstellung des zweiten Abschnitts und/oder des ersten Abschnitts des graphischen Reichweitenobjektes signalisiert wird, dass eine Neuberechnung ansteht, und die Neuberechnung nur durchgeführt wird, wenn die Entfernung zum Navigationsziel um einen bestimmten Schwellwert oberhalb der minimalen Reichweite überschritten wird.

2. Verfahren zum Anzeigen der Reichweite eines Fahrzeugs (10) mit einer Vorrichtung nach Anspruch 1, bei dem
wenigstens ein Navigationsziel erfasst wird und eine Route zum Navigationsziel berechnet wird,
ein Ladezustand eines Energiespeichers für eine Antriebseinrichtung des Fahrzeugs (10) erfasst wird,
wobei bei einem Fahrzeug (10) mit einem Verbrennungsmotor der Energiespeicher ein Kraftstofftank ist, bei einem Fahrzeug (10) mit einem Elektromotor eine wiederaufladbare Batterie zum Einsatz kommt und bei einem Hybridfahrzeug ein Verbrennungsmotor mit einem Kraftstofftank und ein Elektromotor mit einer wiederaufladbaren Batterie eingesetzt werden und der Ladezustand bei einem Fahrzeug (10) mit einem Verbrennungsmotor dem Füllstand des Tanks oder dem Fülldruck des Tanks entspricht und bei einem Fahrzeug (10) mit einem Elektromotor dem Ladezustand der Batterie entspricht,
ein Energieverbrauch des Fahrzeugs (10) ermittelt wird,
aus dem Ladezustand des Energiespeichers (11) und dem Energieverbrauch des Fahrzeugs (10) eine Ist-Reichweite des Fahrzeugs (10) berechnet wird, die durch eine minimale und eine maximale Reichweite definiert ist,
wobei eine obere und untere Grenze der Ist-Reichweite über eine Abschätzung des zukünftigen Energieverbrauchs des Fahrzeugs (10) ermittelt wird, der dann durch eine Verbrauchsobergrenze und eine Verbrauchsuntergrenze definiert wird und der minimalen Reichweite die Verbrauchsobergrenze des ermittelten Energieverbrauchs und der maximalen Reichweite die Verbrauchsuntergrenze des ermittelten Energieverbrauchs zugrunde gelegt wird,
die Ist-Reichweite des Fahrzeugs (10) in der Reichenweitenanzeige visualisiert wird, wobei die Reichweitenanzeige ein graphisches Fahrzeugobjekt, wenigstens ein graphisches Zielobjekt und ein veränderbares graphisches Reichweitenobjekt, das sich von dem Fahrzeugobjekt in Richtung des Zielobjekts erstreckt, umfasst,
wobei das graphische Reichweitenobjekt wenigstens einen ersten Abschnitt, der sich von dem Fahrzeugobjekt bis zu einem die minimale Reichweite repräsentierenden Bereich des Reichweitenobjektes erstreckt, und einen zweiten Abschnitt, der sich vom ersten Abschnitt bis zu einem die maximale Reichweite repräsentierende Ende des Reichweitenobjektes erstreckt, umfasst,
wobei der erste Abschnitt und der zweite Abschnitt des Reichweitenobjektes angezeigt werden, wenn die Entfernung zum Navigationsziel geringer als die maximale Reichweite ist, wobei das Zielobjekt im zweiten Abschnitt des Reichweitenobjektes liegt,
wobei eine Ladestation, also eine Tankstelle für Fahrzeuge mit Verbrennungsmotoren, oder eine elektrische Ladestation für Elektrofahrzeuge, als Zwischenziel im ersten Abschnitt des Reichweitenobjektes angezeigt wird, deren Entfernung zum Fahrzeug (10) geringer als die minimale Reichweite ist,
wobei, wenn die Entfernung des Fahrzeugs (10) zum Navigationsziel größer als die minimale Reichweite, aber geringer als die maximale Reichweite ist, und auf der berechneten Route keine Ladestation zur Verfügung steht, deren Entfernung zum Fahrzeug (10) geringer als die minimale Reichweite ist, durch Neuberechnung der Route zum Navigationsziel eine Ladestation gesucht wird, deren Entfernung auf der neu berechneten Route geringer als die minimale Reichweite ist, und
wobei eine Ladestation, deren Entfernung zum Fahrzeug (10) geringer als die minimale Reichweite ist, durch Neuberechnung der Route als Zwischenziel ermittelt wird, wobei dem Nutzer durch Änderung der graphischen Darstellung des zweiten Abschnitts und/oder des ersten Abschnitts des graphischen Reichweitenobjektes signalisiert wird, dass eine Neuberechnung ansteht, und die Neuberechnung nur durchgeführt wird, wenn die Entfernung zum Navigationsziel um einen bestimmten Schwellwert oberhalb der minimalen Reichweite überschritten wird.

3. Verfahren gemäß Anspruch 2,
**dadurch gekennzeichnet, dass**
die Reichweitenanzeige nicht angezeigt wird, wenn die Entfernung zum Navigationsziel geringer als die minimale Reichweite ist.

4. Verfahren gemäß Anspruch 2,
**dadurch gekennzeichnet, dass**
die Reichweitenanzeige angezeigt wird, wenn die Entfernung zum Navigationsziel geringer als die minimale Reichweite ist, wobei das Zielobjekt im ersten Abschnitt des Reichweitenobjektes liegt und der zweite Abschnitt des Reichenweitenobjektes nicht visualisiert wird.

5. Verfahren gemäß einem der Ansprüche 2 bis 4,
**dadurch gekennzeichnet, dass**
das man einen akustischen Hinweis erzeugt, wenn die Entfernung zu dem Navigationsziel größer als die minimale Reichweite wird.

6. Verfahren gemäß einem der Ansprüche 2 bis 5,
**dadurch gekennzeichnet, dass**
das graphische Reichweitenobjekt als längliches balkenartiges oder bandartiges Objekt visualisiert wird.

## Claims

1. Apparatus for displaying the range of a vehicle (10), comprising
a device (14) for acquiring navigation destinations and for calculating a route to the navigation destination,
a device (15) for acquiring the state of charge of an energy storage device (11) of the vehicle (10),
wherein, in the case of a vehicle (10) having an internal combustion engine, the energy storage device (11) is a fuel tank, in the case of a vehicle having an electric motor, a rechargeable battery is used, and in the case of a hybrid vehicle, an internal combustion engine having a fuel tank and an electric motor having a rechargeable battery are used, and the state of charge in the case of a vehicle (10) having an internal combustion engine corresponds to the filling level of the tank or the filling pressure of the tank, and the state of charge in the case of a vehicle having an electric motor corresponds to the state of charge of the battery,
a device for determining the energy consumption of the vehicle,
a display area for depicting a range indicator and
a control unit (16) which is connected to the device (14) for acquiring the navigation destinations, the device (15) for acquiring the state of charge, the device for determining the energy consumption of the vehicle and to the display area, wherein the control unit (16) calculates an actual range of the vehicle (10) from the state of charge of the energy storage device (11) and from the energy consumption of the vehicle, which actual range is defined by a minimum and a maximum range,
wherein an upper and a lower limit of the actual range is determined by an assessment of the future energy consumption of the vehicle (10) which is then defined by a consumption upper limit and a consumption lower limit, and the minimum range is based on the consumption upper limit of the determined energy consumption and the maximum range is based on the consumption lower limit of the determined energy consumption,
wherein the actual range of the vehicle (10) is visualized in the range indicator, wherein the range indicator comprises a graphical vehicle object, at least one graphical destination object and a variable graphical range object which extends from the vehicle object toward the target object, and wherein the graphical range object comprises at least a first portion extending from the vehicle object to a region of the range object representing the minimum range, and a second portion extending from the first portion to an end of the range object representing the maximum range,
wherein the first portion and the second portion of the range object are displayed if the distance to the navigation destination is less than the maximum range, wherein the destination object is in the second portion of the range object,
wherein a charging station, i.e. a filling station for vehicles having internal combustion engines, or an electric charging station for electric vehicles, at a distance from the vehicle (10) of less than the minimum range is displayed as an intermediate destination in the first portion of the range object,
wherein the apparatus is designed to search for a charging station at a distance on the recalculated route of less than the minimum range by recalculating the route to the navigation destination, if the distance of the vehicle (10) to the navigation destination is greater than the minimum range but less than the maximum range and no charging station is available on the calculated route at a distance from the vehicle (10) of less than the minimum range, and
wherein a charging station at a distance from the vehicle (10) of less than the minimum range is determined as an intermediate destination by recalculating the route, wherein a change in the graphical depiction of the second portion and/or the first portion of the graphical range object signals to the user that a recalculation is pending, and the recalculation is only carried out if the distance to the navigation destination is exceeded by a certain threshold above the minimum range.

2. Method for displaying the range of a vehicle (10) by means of an apparatus according to claim 1, wherein
at least one navigation destination is acquired and a route to the navigation destination is calculated,
a state of charge of an energy storage device for a drive unit of the vehicle (10) is acquired,
wherein, in the case of a vehicle (10) having an internal combustion engine, the energy storage device is a fuel tank, in the case of a vehicle (10) having an electric motor, a rechargeable battery is used, and in the case of a hybrid vehicle, an internal combustion engine having a fuel tank and an electric motor having a rechargeable battery are used, and the state of charge in the case of a vehicle (10) having an internal combustion engine corresponds to the filling level of the tank or the filling pressure of the tank, and the state of charge in the case of a vehicle (10) having an electric motor corresponds to the state of charge of the battery,
an energy consumption of the vehicle (10) is determined,
an actual range of the vehicle (10) is calculated from the state of charge of the energy storage device (11) and the energy consumption of the vehicle (10), which actual range is defined by a minimum and a maximum range,
wherein an upper and a lower limit of the actual range is determined by an assessment of the future energy consumption of the vehicle (10) which is then defined by a consumption upper limit and a consumption lower limit, and the minimum range is based on the consumption upper limit of the determined energy consumption and the maximum range is based on the consumption lower limit of the determined energy consumption,
the actual range of the vehicle (10) is visualized in the range indicator,
wherein the range indicator comprises a graphical vehicle object, at least one graphical destination object and a variable graphical range object which extends from the vehicle object toward the target object,
wherein the graphical range object comprises at least a first portion extending from the vehicle object to a region of the range object representing the minimum range, and a second portion extending from the first portion to an end of the range object representing the maximum range,
wherein the first portion and the second portion of the range object are displayed if the distance to the navigation destination is less than the maximum range, wherein the destination object is in the second portion of the range object,
wherein a charging station, i.e. a filling station for vehicles having internal combustion engines, or an electric charging station for electric vehicles, at a distance from the vehicle (10) of less than the minimum range is displayed as an intermediate destination in the first portion of the range object,
wherein, if the distance of the vehicle (10) to the navigation destination is greater than the minimum range but less than the maximum range, and no charging station is available on the calculated route at a distance from the vehicle (10) of less than the minimum range, a charging station at a distance on the recalculated route of less than the minimum range is searched for by recalculating the route to the navigation destination, and
wherein a charging station at a distance from the vehicle (10) of less than the minimum range is determined as an intermediate destination by recalculating the route,
wherein a change in the graphical depiction of the second portion and/or the first portion of the graphical range object signals to the user that a recalculation is pending, and the recalculation is only carried out if the distance to the navigation destination is exceeded by a certain threshold above the minimum range.

3. Method according to claim 2,
**characterized in that**
the range indicator is not displayed if the distance to the navigation destination is less than the minimum range.

4. Method according to claim 2,
**characterized in that**
the range indicator is displayed if the distance to the navigation destination is less than the minimum range, wherein the destination object is in the first portion of the range object and the second portion of the range object is not visualized.

5. Method according to any of claims 2 to 4,
**characterized in that**
an acoustic alert is generated if the distance to the navigation destination becomes greater than the minimum range.

6. Method according to any of claims 2 to 5,
**characterized in that**
the graphical range object is visualized as an elongate bar-like or strip-like object.

## Revendications

1. Dispositif d'indication de l'autonomie d'un véhicule (10), comprenant
un appareil (14) de détection de destinations de navigation et de calcul d'un itinéraire vers une destination de navigation,
un appareil (15) de détection de l'état de charge d'un accumulateur d'énergie (11) du véhicule (10),
dans lequel l'accumulateur d'énergie (11) est un réservoir de carburant dans le cas d'un véhicule (10) comportant un moteur à combustion interne, une batterie rechargeable est utilisée dans le cas d'un véhicule comportant un moteur électrique et un moteur à combustion interne comportant un réservoir de carburant et un moteur électrique comportant une batterie rechargeable sont utilisés dans le cas d'un véhicule hybride et l'état de charge correspond au niveau de remplissage du réservoir ou à la pression de remplissage du réservoir dans le cas d'un véhicule (10) comportant un moteur à combustion interne et correspond à l'état de charge de la batterie dans le cas d'un véhicule comportant un moteur électrique,
un appareil de détermination de la consommation d'énergie du véhicule,
une surface d'affichage de représentation d'une indication de l'autonomie et
une unité de commande (16) qui est reliée à l'appareil (14) de détection de destinations de navigation, à l'appareil (15) de détection de l'état de charge, à l'appareil de détermination de la consommation d'énergie du véhicule et à la surface d'affichage, dans lequel l'unité de commande (16) calcule à partir de l'état de charge de l'accumulateur d'énergie (11) et de la consommation d'énergie du véhicule une autonomie réelle du véhicule (10) qui est définie par une autonomie minimale et une autonomie maximale,
dans lequel une limite supérieure et une limite inférieure de l'autonomie réelle sont déterminées par l'intermédiaire d'une estimation de la consommation d'énergie future du véhicule (10), qui est alors définie par une limite supérieure de consommation et une limite inférieure de consommation, et la limite supérieure de consommation de la consommation d'énergie déterminée est prise comme base pour l'autonomie minimale et la limite inférieure de consommation de la consommation d'énergie déterminée comme base pour l'autonomie maximale,
dans lequel l'autonomie réelle du véhicule (10) est visualisée dans l'affichage d'autonomie, dans lequel l'affichage d'autonomie comprend un objet de véhicule graphique, au moins un objet de destination graphique et un objet d'autonomie graphique modifiable, qui s'étend depuis l'objet de véhicule en direction de l'objet de destination, et dans lequel l'objet d'autonomie graphique comprend au moins une première section qui s'étend depuis l'objet de véhicule jusqu'à une zone de l'objet d'autonomie représentant l'autonomie minimale, et une seconde section qui s'étend depuis la première section jusqu'à une extrémité de l'objet d'autonomie représentant l'autonomie maximale,
dans lequel la première section et la seconde section de l'objet d'autonomie sont affichées lorsque l'éloignement jusqu'à la destination de navigation est inférieur à l'autonomie maximale, dans lequel l'objet de destination est situé dans la seconde section de l'objet d'autonomie,
dans lequel une station de charge, c'est-à-dire une station-service pour véhicules comportant des moteurs à combustion interne, ou une station de charge électrique pour véhicules électriques, est affichée comme destination intermédiaire dans la première section de l'objet d'autonomie, dont l'éloignement jusqu'au véhicule (10) est inférieur à l'autonomie minimale,
dans lequel le dispositif est conçu pour rechercher, en recalculant l'itinéraire vers la destination de navigation, une station de charge dont l'éloignement sur l'itinéraire recalculé est inférieur à l'autonomie minimale, lorsque l'éloignement du véhicule (10) jusqu'à la destination de navigation est supérieur à l'autonomie minimale, mais inférieur à l'autonomie maximale, et que sur l'itinéraire calculé, aucune station de charge n'est disponible dont l'éloignement jusqu'au véhicule (10) est inférieur à l'autonomie minimale, et
dans lequel une station de charge, dont l'éloignement jusqu'au véhicule (10) est inférieur à l'autonomie minimale, est déterminée comme destination intermédiaire par un nouveau calcul de l'itinéraire, dans lequel il est signalé à l'utilisateur par une modification de l'illustration graphique de la seconde section et/ou de la première section de l'objet d'autonomie graphique qu'un nouveau calcul est en cours, et le nouveau calcul n'est effectué que si l'éloignement jusqu'à la destination de navigation est dépassé d'une valeur seuil déterminée supérieure à l'autonomie minimale.

2. Procédé d'affichage de l'autonomie d'un véhicule (10) comportant un dispositif selon la revendication 1, dans lequel
au moins une destination de navigation est détectée et un itinéraire vers la destination de navigation est calculé,
un état de charge d'un accumulateur d'énergie pour un appareil d'entraînement du véhicule (10) est détecté,
dans lequel l'accumulateur d'énergie est un réservoir de carburant dans le cas d'un véhicule (10) comportant un moteur à combustion interne, une batterie rechargeable est utilisée dans le cas d'un véhicule (10) comportant un moteur électrique et un moteur à combustion interne comportant un réservoir de carburant et un moteur électrique comportant une batterie rechargeable sont utilisés dans le cas d'un véhicule hybride et l'état de charge correspond au niveau de remplissage du réservoir ou à la pression de remplissage du réservoir dans le cas d'un véhicule (10) comportant un moteur à combustion interne et correspond à l'état de charge de la batterie dans le cas d'un véhicule (10) comportant un moteur électrique,
une consommation d'énergie du véhicule (10) est détectée,
à partir de l'état de charge de l'accumulateur d'énergie (11) et de la consommation d'énergie du véhicule (10), une autonomie réelle du véhicule (10) est calculée, qui est définie par une autonomie minimale et une autonomie maximale,
dans lequel une limite supérieure et une limite inférieure de l'autonomie réelle sont déterminées par l'intermédiaire d'une estimation de la consommation d'énergie future du véhicule (10), qui est alors définie par une limite supérieure de consommation et une limite inférieure de consommation, et la limite supérieure de consommation de la consommation d'énergie déterminée est prise comme base pour l'autonomie minimale et la limite inférieure de consommation de la consommation d'énergie déterminée comme base pour l'autonomie maximale,
l'autonomie réelle du véhicule (10) est visualisée dans l'affichage d'autonomie, dans lequel l'affichage d'autonomie comprend un objet de véhicule graphique, au moins un objet de destination graphique et un objet d'autonomie graphique modifiable qui s'étend de l'objet de véhicule en direction de l'objet de destination,
dans lequel l'objet d'autonomie graphique comprend au moins une première section qui s'étend depuis l'objet de véhicule jusqu'à une zone de l'objet d'autonomie représentant l'autonomie minimale, et une seconde section qui s'étend depuis la première section jusqu'à une extrémité de l'objet d'autonomie représentant l'autonomie maximale,
dans lequel la première section et la seconde section de l'objet d'autonomie sont affichées lorsque l'éloignement jusqu'à la destination de navigation est inférieur à l'autonomie maximale, dans lequel l'objet de destination est situé dans la seconde section de l'objet d'autonomie,
dans lequel une station de charge, c'est-à-dire une station-service pour véhicules comportant des moteurs à combustion interne, ou une station de charge électrique pour véhicules électriques, est affichée comme destination intermédiaire dans la première section de l'objet d'autonomie, dont l'éloignement jusqu'au véhicule (10) est inférieur à l'autonomie minimale,
dans lequel, lorsque l'éloignement du véhicule (10) jusqu'à la destination de navigation est supérieur à l'autonomie minimale mais inférieur à l'autonomie maximale, et qu'il n'y a pas de station de charge disponible sur l'itinéraire calculé dont l'éloignement jusqu'au véhicule (10) est inférieur à l'autonomie minimale, une station de charge est recherchée en recalculant l'itinéraire vers la destination de navigation dont l'éloignement sur l'itinéraire recalculé est inférieur à l'autonomie minimale, et
dans lequel une station de charge, dont l'éloignement jusqu'au véhicule (10) est inférieur à l'autonomie minimale, est déterminée comme destination intermédiaire par un nouveau calcul de l'itinéraire, dans lequel il est signalé à l'utilisateur par une modification de l'illustration graphique de la seconde section et/ou de la première section de l'objet d'autonomie graphique qu'un nouveau calcul est en cours, et le nouveau calcul n'est effectué que si l'éloignement jusqu'à la destination de navigation est dépassé d'une valeur seuil déterminée supérieure à l'autonomie minimale.

3. Procédé selon la revendication 2,
**caractérisé en ce que**
l'affichage d'autonomie ne s'affiche pas si l'éloignement jusqu'à la destination de navigation est inférieur à l'autonomie minimale.

4. Procédé selon la revendication 2,
**caractérisé en ce que**
l'affichage d'autonomie est affiché lorsque l'éloignement jusqu'à la destination de navigation est inférieur à l'autonomie minimale, dans lequel l'objet de destination se trouve dans la première section de l'objet d'autonomie et la seconde section de l'objet d'autonomie n'est pas visualisée.

5. Procédé selon l'une des revendications 2 à 4,
**caractérisé en ce que**
l'on génère une alerte sonore lorsque l'éloignement jusqu'à la destination de navigation devient supérieur à l'autonomie minimale.

6. Procédé selon l'une des revendications 2 à 5,
**caractérisé en ce que**
l'objet d'autonomie graphique est visualisé sous la forme d'un objet allongé en forme de barre ou de bande.
